# EUROPÄISCHE PATENTSCHRIFT

(11) **EP 3 092 439 B1**
(45) Veröffentlichungstag und Bekanntmachung des Hinweises auf die Patenterteilung: **31.08.2022**
(21) Anmeldenummer: 15700352.6
(22) Anmeldetag: 08.01.2015
(51) Int. Cl.: F21V 8/00, F21V 33/00

(54) **LEUCHTVORRICHTUNG**
LIGHTING SYSTEM
DISPOSITIF D'ÉCLAIRAGE

(30) Priorität: 10.01.2014 DE 202014000196 U; 13.01.2014 DE 202014000264 U
(43) Veröffentlichungstag der Anmeldung: 16.11.2016
(73) Patentinhaber: Novomatic AG, 2352 Gumpoldskirchen (AT)
(72) Erfinder: GAWEL, Marek, A-2352 Gumpoldskirchen (AT)
(86) Internationale Anmeldenummer: PCT/EP2015/050252
(87) Internationale Veröffentlichungsnummer: WO 2015/104331

(56) Entgegenhaltungen:
- EP-A1- 0 462 361
- EP-A1- 1 837 588
- EP-A1- 1 930 718
- WO-A1-2006/123444
- WO-A1-2008/038754
- GB-A- 2 462 008
- US-A1- 2005 259 428

## Beschreibung

### TECHNISCHES GEBIET

Die vorliegende Erfindung betrifft ein Portal bestehend aus einem Vorrichtungsgehäuse und einer Leuchtvorrichtung mit einem Leuchtpaneel, mit zumindest einer eine Schmalseite des Leuchtpaneels zugeordneten Lichtquelle zum Einkoppeln von Licht in das Leuchtpaneel, sowie einem einer Flachseite des Leuchtpaneels zugewandten Reflektor, wobei die dem Reflektor zugewandte Flachseite des Leuchtpaneels und/oder der Reflektor mit einer Oberflächenstruktur versehen ist.

### STAND DER TECHNIK

Solche Leuchtvorrichtungen können in Gebäuden oder im Außenbereich eingesetzt werden und als Raumbeleuchtung, Dekorationselement oder Gestaltungselement dienen, wobei jedoch auch andere Anwendungszwecke in Betracht kommen. Insbesondere können solche Leuchtvorrichtungen als Struktur- und/oder Dekorationselement von Spiel- und/oder Unterhaltungsvorrichtungen wie Casinogeräten oder anderen Bedienungsterminals dienen.

Um eine hohe Leuchtkraft ohne Blendwirkung zu erreichen, wird bei solchen Leuchtvorrichtungen das von der zumindest einen Lichtquelle - beispielsweise einem LED-Band beziehungsweise einer LED-Anordnung - abgegebene Licht schmalseitig in ein relativ großflächiges Leuchtpaneel eingekoppelt und zumindest teilweise verteilt über dessen Flachseite abgestrahlt. Um trotz der schmalseitigen Lichteinspeisung eine gleichmäßige Lichtverteilung in dem Leuchtpaneel zu erreichen, kann eine Flachseite des Leuchtpaneels mit einer lichtstreuenden beziehungsweise lichtbrechenden Oberflächenstruktur versehen sein, die beispielsweise in Form einer Bedruckung der Oberfläche ausgebildet sein kann. Insbesondere kann eine solche Oberflächenstruktur in Verbindung mit einem der genannten Flachseite des Leuchtpaneels zugewandten Reflektor vorgesehen sein, der an der genannten Flachseite aus dem Leuchtpaneel austretendes Licht in das Leuchtpaneel beziehungsweise auf dessen Flachseite zurückwirft, sodass das Licht die genannte Oberflächenstruktur zumindest zweimal passiert und insofern mehrfach an der Oberflächenstruktur aufgestreut wird. Das von dem Reflektor in das Leuchtpaneel zurückgeworfene Licht kann auf der dem Reflektor gegenüberliegenden Flachseite des Leuchtpaneels austreten.

Eine Leuchtvorrichtung der genannten Art ist aus der Schrift US 2012/0287631A1 bekannt, gemäß der ein Leuchtpaneel in Form eines Acrylpaneels auch eine Rückseite von einem Reflektorpaneel abgedeckt ist, wobei die dem Reflektor zugewandte Flachseite des genannten Paneels mit einer wolkenförmigen Oberflächenstruktur in Form einer Tintenbedruckung versehen ist. Die genannte wolkenförmige Oberflächenstruktur soll dabei mit zunehmendem Abstand von der schmalseitig angeordneten Lichtquelle einen zunehmend kleiner werdenden Füllgrad - also eine sozusagen abnehmende Wolkendichte - besitzen. Von einer solchen sich verändernden Fülldichte der Oberflächenstruktur verspricht sich die genannte Schrift eine über die Flachseite insgesamt gleichförmige Lichtabstrahlung beziehungsweise Lichttransmission in ein vorderseitig vor das genannte Acrylpaneel gesetztes Abstrahlpaneel.

In der Praxis hat sich allerdings gezeigt, dass bei dieser bekannten Leuchtvorrichtung die Brillanz des abgestrahlten Lichts und die Leuchtkraft des Leuchtpaneels relativ begrenzt sind und es zu einer insgesamt relativ diffusen Abstrahlung kommt. Durch die zu den Lichtquellen hin zunehmend dichtere Oberflächenbedruckung wird der Wirkungsgrad insbesondere in den Randbereichen des Leuchtpaneels beeinträchtigt.

Weiters zeigt die Schrift US20050259428A1 eine Vorrichtung mit einem Vorrichtungsgehäuse zum Halten ein oder mehrerer Leuchtquellen wobei die Vorrichtung in mehrere unterschiedliche Richtungen leuchten soll. Dies ist nur durch eine punktförmige bzw. längliche und radial strahlende Lichtquelle möglich, beispielsweise einer Leuchtstoffröhre.

Aus der Schrift EP1837588A1 - aus dem technischen Sektor der maritimen Navigation - bekannt ist eine Signaleinrichtung für eine erleichterte Hafeneinfahrt. Eine bevorzugt bogenförmige Signaleinrichtung weist entlang der Bogenform mehrere autonome Beleuchtungselemente auf, die separat angesteuert werden sollen. Die solcherart erzielte visuelle Wirkung ist die eines Lichts, das sich entlang des Bogens bewegt, wobei die Position des obligatorischen Signalisierungslichtes und/oder und damit der Lage der linken und / oder rechten Seite der Hafeneinfahrt markiert wird.

### DARSTELLUNG DER ERFINDUNG

Hiervon ausgehend liegt der vorliegenden Erfindung die Aufgabe zugrunde, ein Portal mit einer verbesserten Leuchtvorrichtung der genannten Art zu schaffen, die Nachteile des Standes der Technik vermeidet und Letzteren in vorteilhafter Weise weiterbildet. Insbesondere soll eine gleichmäßige, brillante Lichtabstrahlung mit hoher Leuchtkraft von dem Leuchtpaneel auch mit begrenzten Leistungen der Lichtquellen erreicht werden. Vorzugsweise soll eine Ausleuchtung zu verschiedenen Raumseiten hin beziehungsweise eine gute Sichtbarkeit von verschiedenen Standorten her erreicht werden.

Erfindungsgemäß wird die genannte Aufgabe durch ein Portal bestehend aus einem Vorrichtungsgehäuse und einer Leuchtvorrichtung gemäß Anspruch 1 gelöst. Bevorzugte Ausgestaltungen der Erfindung sind Gegenstand der abhängigen Ansprüche.

Es wird also vorgeschlagen, die zwischen Reflektor und Leuchtpaneel vorgesehene Oberflächenstruktur nicht mehr wolkenförmig, sondern in Form eines Liniengitters aus durchgehenden, sich kreuzenden Linien auszubilden, das sich gleichmäßig über die dem Reflektor zugewandte Flachseite des Leuchtpaneels und/oder die Reflektoroberfläche erstreckt, und wobei das genannte Leucht- und/oder Abstrahlpaneel eine von einem Vorrichtungsgehäuse eingefasste Schmalseite umfasst, über die das Licht in das genannte Paneel eingekoppelt wird, wobei insbesondere die zumindest eine Lichtquelle beispielsweise in Form eine LED-Anordnung zwischen einer Innenseite des genannten Vorrichtungsgehäuses und der genannten Paneelschmalseite angeordnet sein kann. Überraschenderweise kann auch mit einem solchen einfachen Liniengitter eine hohe Vergleichmäßigung der Lichtabstrahlung aus dem Leuchtpaneel erreicht werden, wobei sich größere Transmissionsverluste in den Randbereichen des Leuchtpaneels, wie sie im Stand der Technik bekannt waren, vermeiden lassen.

In vorteilhafter Weiterbildung der Erfindung kann die Oberflächenstruktur eine über die Flachseite des Leuchtpaneels im Wesentlichen gleichbleibende Maschenweite und/oder einen gleichbleibenden Füllgrad besitzen. Die Oberflächenstruktur kann in Randbereichen des Paneels in etwa genauso dicht wie in einem Zentralbereich des Leuchtpaneels ausgebildet sein und unabhängig von der Anordnung der Lichtquelle - beispielsweise an nur einer Schmalseite des Leuchtpaneels, oder auch an gegenüberliegenden Schmalseiten oder mehreren Schmalseiten des Leuchtpaneels - können verschiedene Randbereiche des Leuchtpaneels und/oder des dem Leuchtpaneels zugewandten Reflektors gleichmäßig dicht oberflächenstrukturiert sein beziehungsweise eine in etwa gleiche Gitterdichte oder Maschenbreite besitzen.

Die Gitterlinien der Gitterstruktur können dabei einen geraden Verlauf besitzen, wobei dies jedoch nicht zwingend ist. Beispielsweise können die durchgehenden, sich kreuzenden Gitterlinien auch einen bogenförmigen oder beispielsweise sinusförmigen Verlauf besitzen.

In Weiterbildung der Erfindung ist die Oberflächenstruktur relativ licht ausgebildet und/oder der Füllgrad der Oberflächenstruktur, das heißt der Flächenanteil der Oberflächenstruktur relativ zum nicht strukturierten Flächenanteil und/oder bezogen auf die Gesamtfläche des Leuchtpaneels, relativ gering. Dies kann durch eine relativ große Maschenweite bei relativ kleiner Linienbreite erzielt werden. In Weiterbildung der Erfindung kann die Oberflächenstruktur einen Füllgrad von etwa 1 Prozent bis 25 Prozent, vorzugsweise 5 Prozent bis 15 Prozent der Gesamtoberfläche der Flachseite des Leuchtpaneels besitzen, wobei der genannte Füllgrad auch vorgesehen sein kann, wenn die Oberflächenstruktur auf der Reflektoroberfläche vorgesehen ist oder auf einer Zwischenschicht beziehungsweise einem Zwischenpaneel beispielsweise in Form einer Zwischenfolie zwischen dem genannten Leuchtpaneel und dem genannten Reflektor.

In vorteilhafter Weiterbildung der Erfindung kann das Liniengitter eine Maschenweite von 2 bis 3 mm besitzen. Eine Linienbreite kann kleiner als 0,5 mm sein, insbesondere etwa im Bereich von 0,01 bis 0,2 mm betragen.

Je nach Linienverlauf kann das Liniengitter unterschiedliche Kreuzungswinkel besitzen, wobei vorzugsweise der Linienverlauf derart ausgebildet ist, dass die Kreuzungswinkel über die Flachseite im Wesentlichen betrachtet die gleichen bleiben. Grundsätzlich käme hierbei ein Kreuzungswinkel von 90 Grad in Betracht, insbesondere wenn ein gerader Linienverlauf vorgesehen ist. Überraschenderweise hat es sich jedoch gezeigt, dass ein von 90 Grad abweichender Kreuzungswinkel vorteilhaft ist, insbesondere im Bereich von etwa 60 Grad bis 80 Grad - beziehungsweise bei Betrachtung des komplementären, größeren Kreuzungswinkels im Bereich von 100 Grad bis 120 Grad. Durch eine solche Verschränkung der Gitterlinien kann eine nochmals vielfältigere Lichtstreuung und damit größere Vergleichmäßigung erreicht werden.

Vorteilhafterweise sind die Gitterlinien relativ zur Schmalseite des Leuchtpaneels - beziehungsweise zu den mehreren Schmalseiten des Leuchtpaneels -, über die das Licht von der Lichtquelle her in das Leuchtpaneel eingekoppelt wird, geneigt angeordnet, sodass die Gitterlinien weder parallel noch senkrecht zu der genannten Schmalseite verlaufen.

Die Gitterstruktur kann aus einer Bedruckung der Paneel- und/oder Reflektoroberfläche bestehen, beispielsweise mittels einer geeigneten Tinte oder Druckfarbe, wobei gegebenenfalls jedoch auch eine andere Ausbildung beispielsweise in Form einer Oberflächenverätzung, -gravur oder -fräsung oder -schleifung vorgesehen sein könnte.

In vorteilhafter Weiterbildung der Erfindung sind die Gitterlinien dabei nicht schwarz, sondern hell ausgebildet, insbesondere in weißer oder weißähnlicher Farbe. Im Vergleich zu dunklen oder gar schwarzen Bedruckungen können Transmissionsverluste deutlich reduziert werden, trotzdem kann überraschenderweise eine hohe Vergleichsmäßigung der Lichtverteilung erzielt werden.

Die Abstrahlung des Lichts von dem Leuchtpaneel kann grundsätzlich in verschiedener Art und Weise erfolgen. In einfacher Weiterbildung der Erfindung kann das Licht unmittelbar von dem Leuchtpaneel, in das das Licht vorzugsweise schmalseitig eingekoppelt wird, abgestrahlt werden, insbesondere über die dem von dem Reflektor abgewandte Flachseite des Leuchtpaneels. Alternativ oder zusätzlich kann dem genannten Leuchtpaneel, in das das Licht eingekoppelt wird, ein weiteres Leucht- und/oder Abstrahlpaneel nachgeordnet sein, beispielsweise dergestalt, dass das Licht, das aus der dem Reflektor abgewandten Flachseite des ersten Paneels austritt, in das nachgeordnete Paneel eintritt, sich in diesem nachgeordneten Paneel weiter ausbreitet und von diesem oder einem nochmals nachgeordneten Leuchtpaneel abgestrahlt wird. Insbesondere kann ein solches Abstrahlpaneel mit einer Flachseite auf der dem Reflektor abgewandten Flachseite des Leuchtpaneels sitzen, in das das Licht eingespeist wird, vorzugsweise unter flächiger Berührung der beiden Paneelflachseiten oder alternativ auch unter Bildung eines Zwischenspalts.

Die Leuchtvorrichtung kann dabei eine oder mehrere Abstrahlflächen umfassen, wobei insbesondere eine dem Reflektor abgewandte Paneelflachseite - des ersten oder eines nachgeordneten Paneels - als Abstrahlfläche dienen kann, sodass das Licht im Wesentlichen quer, insbesondere senkrecht zur Einkoppelrichtung des Lichts, in der das Licht in das Leuchtpaneel schmalseitig eingekoppelt wird, abgestrahlt wird.

Alternativ oder zusätzlich kann in Weiterbildung der Erfindung auch eine Abstrahlfläche vorgesehen sein, die im Wesentlichen quer zur Flachseite des Leuchtpaneels ausgerichtet ist, sodass das Licht im Wesentlichen parallel zu der Ebene, in der das Licht schmalseitig in das Leuchtpaneel eingekoppelt wird, abgestrahlt wird. Vorteilhafterweise ist dabei diese quer ausgerichtete Abstrahlfläche zur Einstrahlebene versetzt angeordnet, sodass das von der Lichtquelle her kommende Licht einen stufenförmigen oder treppenförmigen Ausbreitungsbeziehungsweise Abstrahlweg durch das Leuchtpaneel hindurch nimmt.

Mit einer solchen Ausbildung des Leuchtpaneels beziehungsweise Anordnung der Abstrahlfläche kann die Leuchtvorrichtung sozusagen um die Ecke leuchten und einen Raumbereich seitlich von der Flachseite des Leuchtpaneels ausleuchten.

In vorteilhafter Weiterbildung der Erfindung kann eine mehrachsige Abstrahlung erfolgen beziehungsweise die Leuchtvorrichtung mehrere, zueinander vorzugsweise senkrechte Hauptabstrahlrichtungen besitzen. In vorteilhafter Weiterbildung der Erfindung kann das Leucht- und/oder Abstrahlpaneel eine von der Flachseite des Paneels, die dem Reflektor abgewandt ist, gebildete Abstrahlfläche und zumindest eine weitere, von einer Schmalseite des genannten Leucht- und/oder Abstrahlpaneels gebildete Abstrahlfläche besitzen.

Zusätzlich zu dieser Einkoppelschmalseite kann das genannte Leuchtpaneel oder ein nachgeordnetes Abstrahlpaneel eine weitere Paneelschmalseite umfassen, die von dem genannten Vorrichtungsgehäuse nicht abgedeckt ist und/oder aus dem Vorrichtungsgehäuse herausragt und/oder freiliegend angeordnet ist, sodass über diese genannte weitere Stirnseite eine Lichtabstrahlung erfolgen kann. Die genannte weitere Paneelschmalseite kann in der Ebene der Einkoppelschmalseite liegen, vorteilhafterweise aber auch in einer Richtung senkrecht zur Paneelflachseite gegenüber der Einkoppelschmalseite versetzt angeordnet sein, sodass sich ein insgesamt treppen- oder stufenförmiger Lichtverlauf zwischen der Lichtquelle und der genannten Austrittsschmalseite durch das Paneel oder die Paneele hindurch ergibt.

Die Leuchtvorrichtung kann verschiedene Formen und Ausbildungen besitzen. In vorteilhafter Weiterbildung der Erfindung kann die Leuchtvorrichtung als vorzugsweise bogenförmiges Portal nach Art eines Gates ausgebildet sein, das einen Freiraum überspannt und/oder selbstragend ausgebildet ist. Das Portal kann eine Bodenaufstandsfläche bzw. Füße besitzen und selbstragen frei am Boden aufstellbar sein. Alternativ oder zusätzlich kann das Portal mit einer zu überspannenden Struktur, beispielsweise einem Spieltisch, verbunden bzw. daran verankert sein.

Vorteilhafterweise kann das Portal einen modularen Aufbau besitzen und aus mehreren Portalteilen, insbesondere geraden Basisteilen und zumindest einem gebogenen und/oder geknickten Verbindungsteil zusammensetzbar sein, wobei die Portalteile vorzugsweise derart konturiert sind, dass die Portalteile miteinander formschlüssig in Halteeingriff bringbar, insbesondere ineinander steckbar sind, so dass die Portalteile zusammen eine knicksteife Portalstruktur bilden.

An dem Portal kann vorzugsweise im Bereich eines Portalgipfels oder oberen Begrenzungsbereichs zumindest eine Anzeigevorrichtung zur Anzeige von Informationen angeordnet sein, wobei beispielsweise zwei zu gegenüberliegenden Seiten hin ausgerichtete Bildschirme vorgesehen sein können. Die Anzeigevorrichtung kann an dem Portal befestigt oder an anderer Stelle gelagert sein.

Vorteilhafterweise kann das Portal zum Überspannen eines Spiel- und/oder Unterhaltungsgeräts wie Spieltisch in einem Casino oder einer Spielstätte oder auch zum Überspannen anderer hervorzuhebender Strukturen wie Auslagetischen in Warenhäusern oder auch im Freien eingesetzt werden.

### KURZBESCHREIBUNG DER ZEICHNUNGEN

Die Erfindung wird nachfolgend anhand eines bevorzugten Ausführungsbeispiels und zugehörigen Zeichnungen näher erläutert. In den Zeichnungen zeigen
- Fig. 1:: einen Querschnitt durch eine Leuchtvorrichtung entlang der Linie A-A in Fig. 4 nach einer vorteilhaften Ausführung der Erfindung, der die Anordnung eines Leuchtpaneels in einem Vorrichtungsgehäuse und die Zuordnung der Lichtquelle zu dem Leuchtpaneel zeigt und die Anordnung eines Reflektors an einer Paneelrückseite zeigt,
- Fig. 2:: eine perspektivische Draufsicht auf die mit einer Gitteroberflächenstruktur versehene Flachseite des Leuchtpaneels aus Fig. 1, die das Liniengitter aus durchgehenden, sich kreuzenden Gitterlinien zeigt,
- Fig. 3:: eine frontale Draufsicht auf das Liniengitter des Leuchtpaneels aus Fig. 2, die die Maschenweite und Linienbreite verdeutlicht,
- Fig. 4:: eine Seitenansicht der insgesamt bogenförmigen Leuchtvorrichtung sowie deren Anordnung über einem Spieltisch,
- Fig. 5:: eine seitliche Draufsicht auf die Leuchtvorrichtung aus Fig. 4,
- Fig. 6:: eine perspektivische Seitenansicht eines pfostenförmigen Portalbasisteils des Leuchtportals aus Fig. 4 und 5,
- Fig. 7:: eine perspektivische Seitenansicht eines bogenförmigen Portalbasisteils des Leuchtportals aus Fig. 4 und 5, das mit dem pfostenförmigen Portalbasisteil aus Fig. 6 zusammensetzbar ist, und
- Fig. 8:: eine Schnittansicht eines Portalteils aus den Figuren 6 oder 7, die die Integration der Leuchtvorrichtungs-Funktionsbauteile in das Portal und deren Anordnung zueinander zeigt.

### AUSFÜHRUNG DER ERFINDUNG

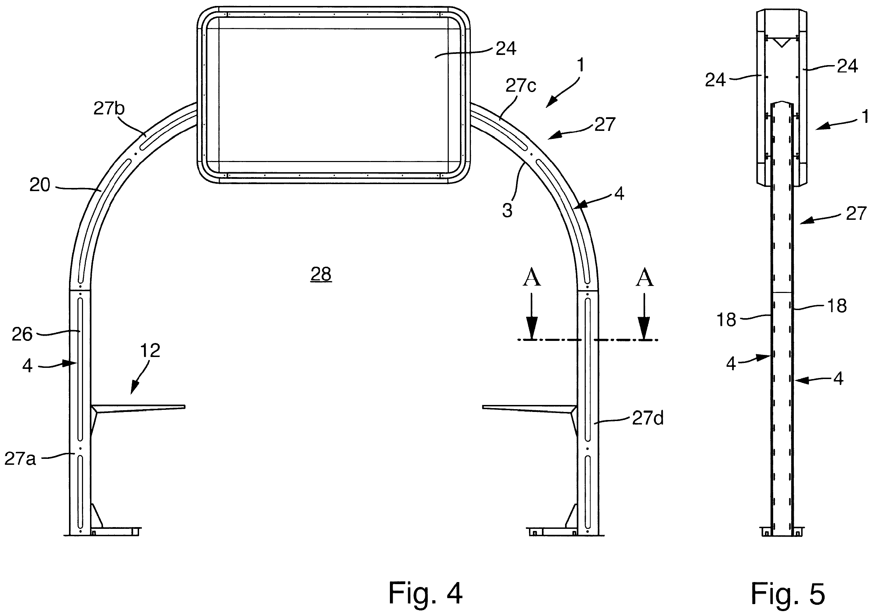

Wie die Figuren 4 und 5 zeigen, kann die Leuchtvorrichtung 1 in Form eines Leuchtbogens oder -portals ausgebildet sein, das sich nach Art eines Türrahmens beziehungsweise nach Art eines Türbogens über einen Spieltisch 12 beispielsweise in Form eines Roulettetisches oder eines anderes Spiel- oder Unterhaltungsgerätes wölben bzw. einen Freiraum 28 überspannen kann. Die Leuchtvorrichtung 1 kann dabei einen - grob gesprochen - rechteckigen oder kastenförmigen Querschnitt besitzen, dessen Flachseiten sich zu den Außen- und Innenseiten des genannten Lichtbogens hin erstrecken und dessen Schmalseiten sich in Durchgangsrichtung des Lichtbogens erstrecken können. Es versteht sich jedoch, dass die Leuchtvorrichtung auch andere Konturierungen und andere Geometrien besitzen kann.

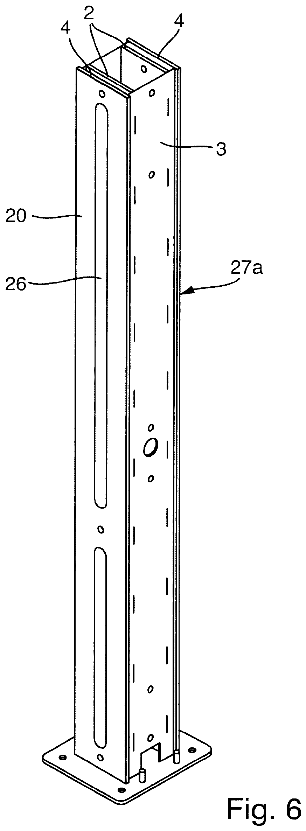

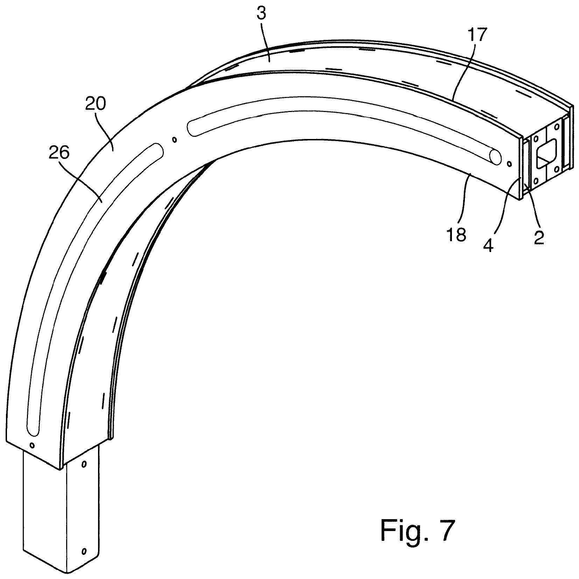

Wie die Figuren 4 bis 7 zeigen, kann das Gate bzw. das Portal 27, in das die Leuchtvorrichtung 1 integriert ist, einen modularen Aufbau besitzen und aus mehreren Portalteilen, insbesondere geraden Basisteilen 27a und 27d und zumindest einem oder mehreren gebogenen und/oder geknickten Verbindungsteilen 27b und 27c zusammensetzbar sein, wobei die Portalteile 27a-d vorzugsweise derart konturiert sind, dass die Portalteile 27a-d miteinander formschlüssig in Halteeingriff bringbar, insbesondere ineinander steckbar sind, so dass die Portalteile 27a-d zusammen eine knicksteife Portalstruktur bilden.

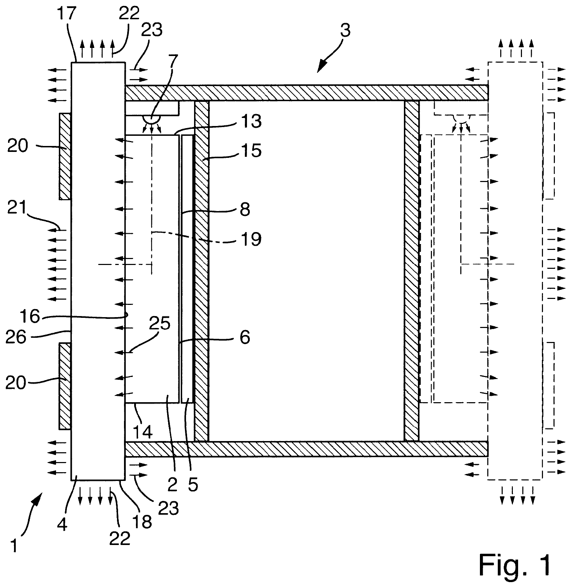

Wie die Figuren 1 bis 3 zeigen, kann die gateförmige Leuchtvorrichtung ein plattenförmiges, insbesondere ebenes Leuchtpaneel 2 umfassen, das in einem vorzugsweise kastenförmigen Vorrichtungsgehäuse 3 angeordnet sein kann. Wie Figur 1 zeigt, kann das Vorrichtungsgehäuse 3 insbesondere die Schmalseiten 13 und 14 des genannten Leuchtpaneels 2 umgreifen und auch eine Rückseite beziehungsweise eine rückseitige Flachseite 8 mit einer Gehäusewandung 15 abdecken.

Wie Fig. 1 in strichlierter Darstellung zeigt, können in das Vorrichtungsgehäuse 3 zwei solcher Leuchtpaneele 2 integriert sein, die vorteilhafterweise zu gegenüberliegenden Seiten hin ausgerichtet sein können. Ist die Leuchtvorrichtung 1 in Form eines Leuchtbogens oder -portals ausgebildet, wie dies die Figuren 4 und 5 zeigen, können die genannten Leuchtpaneele 2 zu den Stirnseiten des Leuchtbogens orientiert sein.

Den genannten Schmalseiten 13 und 14 des Leuchtpaneels 2 kann eine Lichtquelle 7 in Form eines LED-Bands oder einer anderen LED-Anordnung zugeordnet sein, sodass die Lichtquelle 7 Licht in zumindest eine der genannten Schmalseite 13 und 14 einstrahlt, sodass das Licht in das Leuchtpaneel eingekoppelt wird. Insbesondere kann die Lichtquelle 7 unmittelbar gegenüberliegend der genannten Schmalseite 13 oder 14 angeordnet sein, beispielsweise am Vorrichtungsgehäuse 3 innenseitig befestigt sein.

Einer dem Gehäuseinneren zugewandten Flachseite 8 des Leuchtpaneels 2 ist ein Reflektor 5 zugeordnet, der aus der genannten Flachseite 8 austretendes Licht einfängt und in das Leuchtpaneel 2 zurückwirft. Der genannte Reflektor 5 kann ebenfalls paneelbeziehungsweise plattenförmig, insbesondere eben ausgebildet sein und unmittelbar auf der genannte Flachseite 8 des Leuchtpaneels 2 sitzen oder hiervon unter spaltförmiger Beabstandung angeordnet sein. Beispielsweise kann der Reflektor 5 ein Reflektorpaneel bilden oder in Form einer Reflektorfolie oder -beschichtung auf die Flachseite 8 aufgebracht sein.

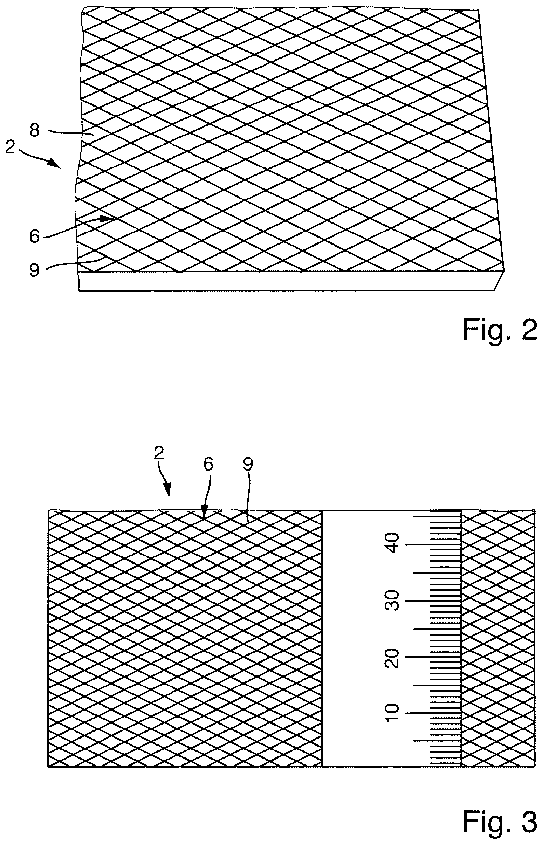

Wie die Figuren 2 und 3 zeigen, ist auf der dem Reflektor 5 zugewandten Flachseite 8 des Leuchtpaneels 2 eine Oberflächenstruktur 6 vorgesehen, die als Liniengitter ausgebildet ist, welches Liniengitter aus durchgehenden, sich kreuzenden Gitterlinien 9 bestehen kann, die auf das Leuchtpaneel 2 aufgedruckt sein können, beispielsweise in Form einer Tinten- oder Farbbedruckung. Vorteilhafterweise sind die genannten Gitterlinien 9 beziehungsweise ist die Oberflächenstruktur 6 weiß oder einer weißähnlichen oder sehr hellen Farbe ausgebildet.

Wie die Figuren 2 und 3 zeigen, können die Gitterlinien 9 einen geraden Verlauf besitzen und sich unter einem Kreuzungswinkel von etwa 60 bis 80 Grad schneiden. Der Füllgrad der Oberflächenstruktur 6 ist vorteilhafterweise relativ gering, insbesondere in dem eingangs genannten Bereich ausgebildet. Dies kann beispielsweise durch das aus den Figuren ersichtliche Verhältnis einer relativ großen Maschenweite zu einer relativ dünnen Linienbreite erzielt werden. Vorteilhafterweise kann die Maschinenweite im Bereich von einigen Millimetern, beispielsweise 2 bis 3 mm betragen, während die Linienbreite nur einen Bruchteil eines Millimeters betragen kann, beispielsweise im Bereich von 0,05 bis 0,5 mm.

Vorteilhafterweise kann die Maschenweite über die gesamte Fläche des Leuchtpaneels 2 beziehungsweise die gesamte Leuchtpaneel-Teilfläche, die mit der Oberflächenstruktur 6 versehen ist, eine gleichbleibende Maschenweite und/oder einen gleichbleibenden Füllungsgrad besitzen, das heißt die Dichte der Gitterstruktur ändert sich im Wesentlichen nicht über die Erstreckung des Leuchtpaneels 2.

Durch die genannte Oberflächenstruktur 6 kann das Licht, das über die Flachseite 8 zum Reflektor 5 hin aus dem Leuchtpaneel 2 austreten will beziehungsweise vom Reflektor 5 in das Leuchtpaneel 2 zurückgeworfen wird, aufgestreut und dementsprechend vergleichmäßigt werden.

Figur 1 zeigt eine Lichtquelle 7 nur an einer Schmalseite 13 des Leuchtpaneels 2, es können aber auch an mehreren Schmalseiten Lichtquellen 7 vorgesehen sein. Die nicht mit Lichtquellen 7 versehenen Schmalseiten innerhalb des Vorrichtungsgehäuses 3 können verspiegelt ausgebildet sein, um hier Transmissionsverluste zu vermeiden.

An der dem Reflektor 5 gegenüberliegenden Flachseite des Leuchtpaneels 2 kann das vergleichmäßigte Licht aus dem Leuchtpaneel 2 austreten, wie dies die Pfeile 25 in Fig. 1 verdeutlichen, beziehungsweise in ein nachgeordnetes, insbesondere auf das Leuchtpaneel 2 aufgesetztes Abstrahlpaneel 4 eintreten, welches vorm Vorrichtungsgehäuse 3 nicht eingefasste Abstrahlflächen besitzt. Als Abstrahlfläche kann hierbei insbesondere eine Flachseite 16 des Leuchtpaneels 2 und/oder eine Flachseite 26 des genannten Abstrahlpaneels 4 dienen, die dem Reflektor 5 abgewandt ist. Die Lichtabstrahlung von besagter Flachseite 26 verdeutlichen die Pfeile 21. Alternativ oder zusätzlich können Schmalseiten 17 und 18 des Abstrahlpaneels 4 Lichtaustritts- beziehungsweise Abstrahlflächen bilden, die sich quer beziehungsweise etwa senkrecht zu der oberflächenstrukturierten Flachseite 8 des Leuchtpaneels 2 erstrecken können und gegenüber der Lichteintritts-Schmalseite versetzt angeordnet sein können, sodass das von den Lichtquellen 7 abgegebene Licht durch das Leuchtpaneel 2 und Abstrahlpaneel 4 sozusagen um die Ecke abgestrahlt werden kann, wie dies die Pfeile 22 und 23 in Fig. 1 verdeutlichen. Der Strahlengang 19 durch das Leuchtpaneel 2 und Abstrahlpaneel 4 kann eine treppenförmige Konturierung besitzen, wenn man die Haupteinstrahlrichtung und die entsprechende Hauptabstrahlrichtung betrachtet, vgl. Figur 1.

Das Leuchtpaneel 2, das Abstrahlpaneel 4 und/oder das Reflektorpaneel 5 können aus verschiedenen Werkstoffen bestehen, beispielsweise jeweils aus einem lichtdurchlässigen Kunststoff wie Plexiglas oder Glas, wobei das Reflektorpaneel 5 eine reflektierende oder spiegelnde Beschichtung aufweisen kann. Insbesondere kann das Leuchtpaneel 2 als Streuplexi, das Abstrahlpaneel 4 als Leuchtplexi und/oder das Reflektorpaneel 5 als Spiegelplexi ausgebildet sein.

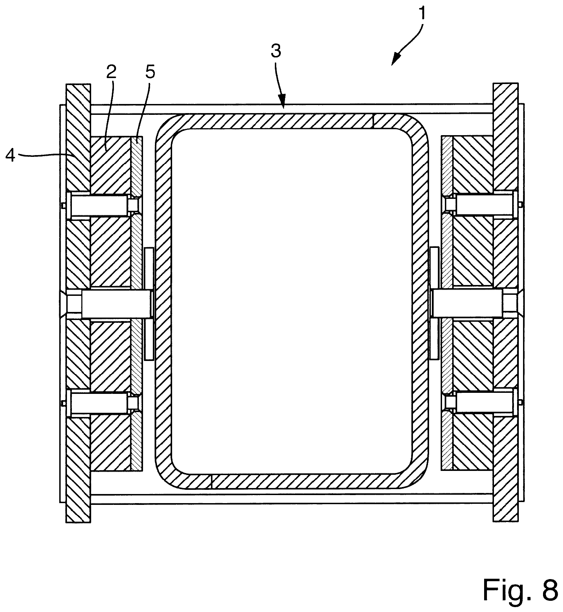

Das Leuchtpaneel 2, das Abstrahlpaneel 4 und/oder das Reflektorpaneel 5 können miteinander fest verbunden und/oder unter gegenseitiger Flächenpressung aufeinander gefügt sein, beispielsweise durch Schrauben oder andere Verbindungselemente wie Nieten, Stifte oder dgl. aufeinander gehalten werden, vgl. Fig. 8. Vorteilhafterweise können das Leuchtpanel 2, das Abstrahlpaneel 4 und das Reflektorpaneel 5 eine vormontierbare Baugruppe bilden und gemeinsam eingebaut werden.

Wie Figur 1 und Figur 5 zeigen, können auf der Abstrahlfläche des Abstrahlpaneels 4, insbesondere auf dessen Flachseite, Abblendelemente 20 angebracht sein, die einen Teil der Abstrahlfläche abdecken und dort einen Lichtaustritt verhindern. Insbesondere können die genannten Abblendelemente 20 verspiegelt oder zumindest stark reflektierend ausgebildet sein, beispielsweise in Form einer verchromten oder polierten Metalloberfläche.

Wie die Figuren 4 und 5 zeigen, kann die Leuchtvorrichtung 1 mit einer Anzeigevorrichtung, beispielsweise in Form eines Bildschirms 24, insbesondere Flachbildschirm oder dergleichen kombiniert sein. Beispielsweise kann ein solcher Bildschirm 24 in einem oberen und/oder gut sichtbaren Bereich, insbesondere im Bereich des Kulminationspunktes des Leuchtbogens angeordnet sein, wobei der Bildschirm 24 an der Leuchtvorrichtung 1 oder auch separat hiervon gelagert sein kann.

## Patentansprüche

1. Portal zum Überspannen eines Geräts, vorzugsweise eines Spiel- und/oder Unterhaltungsgeräts wie Spieltisch, das Portal bestehend aus einem Vorrichtungsgehäuse (3) und einer Leuchtvorrichtung, wobei die Leuchtvorrichtung ein Leuchtpaneel (2) umfasst, sowie zumindest eine einer Schmalseite des Leuchtpaneels (2) zugeordneten Lichtquelle (7) zum Einkoppeln von Licht in das Leuchtpaneel (2), sowie einem einer Flachseite (8) des Leuchtpaneels (2) zugewandten Reflektor (5), wobei die dem Reflektor (5) zugewandte Flachseite (8) des Leuchtpaneels (2) und/oder der Reflektor (5) und/oder eine Zwischenschicht zwischen dem Reflektor (5) und dem Leuchtpaneel (2) mit einer Oberflächenstruktur (6) die als Liniengitter aus durchgehenden, sich kreuzenden Gitterlinien (9) ausgebildet ist versehen ist; und wobei
das Leuchtpaneel (2) zumindest teilweise von dem Vorrichtungsgehäuse (3) eingefasst ist, wobei das Vorrichtungsgehäuse (3) die zumindest eine Schmalseite des Leuchtpaneels (2), über die das Licht von der zumindest einen Lichtquelle (7) in das Leuchtpaneel (2) einkoppelbar ist, abdeckt, wobei die zumindest eine Lichtquelle (7) zwischen einer Innenseite des Vorrichtungsgehäuses (3) und der genannten Paneelschmalseite angeordnet ist und wobei der der Flachseite (8) des Leuchtpaneels (2) zugewandte Reflektor (5) mit einer Gehäusewandung (15) des Vorrichtungsgehäuse (3) abgedeckt ist.

2. Portal nach dem vorhergehenden Anspruch, wobei die Oberflächenstruktur (6) eine über die Flachseite (8) des Leuchtpaneels (2) gleichbleibende Maschenweite und/oder einen gleichbleibenden Füllgrad besitzt.

3. Portal nach einem der vorhergehenden Ansprüche, wobei die Oberflächenstruktur (6) einen Füllgrad von 3 Prozent bis 25 Prozent, vorzugsweise 5 Prozent bis 15 Prozent der Gesamtoberfläche der Flachseite (8) des Leuchtpaneels (2) besitzt.

4. Portal nach einem der vorhergehenden Ansprüche, wobei die Oberflächenstruktur (6) eine Maschenweite im Bereich von 2 bis 3 mm besitzt.

5. Portal nach einem der vorhergehenden Ansprüche, wobei die Gitterlinien (9) weiß ausgebildet sind.

6. Portal nach einem der vorhergehenden Ansprüche, wobei sich die Gitterlinien (9) zu der zumindest einen Schmalseite (13), über die das Licht von der Lichtquelle (7) in das Leuchtpaneel (2) einkoppelbar ist, unter einem spitzen Winkel geneigt erstrecken.

7. Portal nach einem der vorhergehenden Ansprüche, wobei eine von dem Reflektor (5) abgewandte Flachseite (16; 26) des Leuchtpaneels (2) und/oder eines dem Leuchtpaneel (2) nachgeordneten Abstrahlpaneels (4) eine Lichtaustritts- und/oder Abstrahlfläche bildet.

8. Portal nach einem der vorhergehenden Ansprüche, wobei eine sich quer zu der Flachseite (8) erstreckende Schmalseite (17, 18) des Leuchtpaneels (2) und/oder des nachgeordneten Abstrahlpaneels (4) eine Lichtaustritts- und/oder Abstrahlfläche bildet.

9. Portal nach einem der vorhergehenden Ansprüche, wobei eine mehrachsige Abstrahlung vorgesehen ist und die Leuchtvorrichtung mehrere Hauptabstrahlrichtungen besitzt, wobei vorzugsweise eine erste Hauptabstrahlrichtung senkrecht zu der Flachseite (8) des Leuchtpaneels (2) und eine weitere Hauptabstrahlrichtung im Wesentlichen parallel zu der Flachseite (8) des Leuchtpaneels ausgerichtet sind.

10. Portal nach Anspruch 7, wobei das Leuchtpaneel (2) oder das nachgeordnete Abstrahlpaneel (4) eine Paneelschmalseite besitzt, die eine Lichtaustrittsund/oder Abstrahlfläche bildet und relativ zum Vorrichtungsgehäuse (3) freiliegend angeordnet ist derart, dass Licht zur Gehäuseumgebung abstrahlbar ist.

11. Portal nach einem der vorhergehenden Ansprüche, wobei das Portal (27) bogenförmig ausgebildet ist und einen Freiraum (28) überspannt und/oder selbsttragend ausgebildet ist.

12. Portal nach dem vorhergehenden Anspruch, wobei das Portal (27) einen modularen Aufbau besitzt und aus mehreren Portalteilen, insbesondere geraden Basisteilen (27a, 27d) und zumindest einem gebogenen und/oder geknicktem Verbindungsteil (27b, 27c) zusammensetzbar ist, wobei die Portalteile vorzugsweise derart konturiert sind, dass die Portalteile miteinander formschlüssig in Halteeingriff bringbar, insbesondere ineinander steckbar sind.

13. Portal nach einem der beiden vorhergehenden Ansprüche, wobei an dem Portal (27), vorzugsweise im Bereich eines Portalgipfels oder oberen Begrenzungsbereichs, zumindest eine Anzeigevorrichtung zur Anzeige von Informationen, insbesondere zwei zu gegenüberliegenden Seiten hin ausgerichtete Bildschirme (24) vorgesehen sind.

## Claims

1. Portal for spanning a device, preferably a game and/or entertainment device such as a game table, the portal consisting of an apparatus housing (3) and a lighting device, wherein the lighting device comprises an illuminated panel (2), as well as at least one light source (7) assigned to a narrow side of the illuminated panel (2) for feeding light into the illuminated panel (2), as well as a reflector (5) facing a flat side (8) of the illuminated panel (2), wherein the flat side (8) of the illuminated panel (2) facing the reflector (5) and/or the reflector (5) and/or an intermediate layer between the reflector (5) and the illuminated panel (2) is provided with a surface structure (6) formed as a line grid made of continuous, intersecting grid lines (9); and wherein
the illuminated panel (2) is at least partly bordered by the apparatus housing (3), wherein the apparatus housing (3) covers the at least one narrow side of the illuminated panel (2), via which the light from the at least one light source (7) can be fed into the illuminated panel (2), wherein the at least one light source (7) is arranged between an inside of the apparatus housing (3) and the named panel narrow side and wherein the reflector (5) facing the flat side (8) of the illuminated panel (2) is covered with a housing wall (15) of the apparatus housing (3).

2. Portal according to the preceding claim, wherein the surface structure (6) has a constant mesh size and/or a constant degree of filling over the flat side (8) of the illuminated panel (2).

3. Portal according to one of the preceding claims, wherein the surface structure (6) has a degree of filling of 3 percent to 25 percent, preferably 5 percent to 15 percent of the total surface area of the flat side (8) of the illuminated panel (2).

4. Portal according to one of the preceding claims, wherein the surface structure (6) has a mesh size in the range from 2 to 3 mm.

5. Portal according to one of the preceding claims, wherein the grid lines (9) are white.

6. Portal according to one of the preceding claims, wherein the grid lines (9) extend at an acute angle to the at least one narrow side (13), via which the light from the light source (7) can be fed into the illuminated panel (2).

7. Portal according to one of the preceding claims, wherein a flat side (16; 26) of the illuminated panel (2) facing away from the reflector (5) and/or of a radiation panel (4) arranged downstream of the illuminated panel (2) forms a light emission and/or radiation surface.

8. Portal according to one of the preceding claims, wherein a narrow side (17, 18) of the illuminated panel (2) extending transversely to the flat side (8) and/or of the downstream radiation panel (4) forms a light emission and/or radiation surface.

9. Portal according to one of the preceding claims, wherein multi-axis radiation is provided and the lighting device has several main radiation directions, wherein preferably a first main radiation direction is oriented perpendicular to the flat side (8) of the illuminated panel (2) and a further main radiation direction is oriented substantially parallel to the flat side (8) of the illuminated panel.

10. Portal according to Claim 7, wherein the illuminated panel (2) or the downstream radiation panel (4) has a panel narrow side, which forms a light emission and/or radiation surface and is arranged exposed relative to the apparatus housing (3) in such a way that light can be radiated to the housing environment.

11. Portal according to one of the preceding claims, wherein the portal (27) is arc-shaped and spans a free space (28) and/or is self-supporting.

12. Portal according to the preceding claim, wherein the portal (27) has a modular structure and can be assembled from several portal parts, in particular straight base parts (27a, 27d) and at least one curved and/or bent connecting part (27b, 27c), wherein the portal parts are preferably contoured in such a way that the portal parts can be brought into holding engagement with one another in a form-fitting manner, in particular can be inserted into one another.

13. Portal according to one of the two preceding claims, wherein at least one display device for displaying information, in particular two screens (24) oriented towards opposite sides, are provided on the portal (27), preferably in the region of a portal peak or upper boundary area.

## Revendications

1. Portique permettant d'enjamber un appareil, de préférence un appareil de jeu et/ou de divertissement tel qu'une table de jeu, dans lequel le portique est constitué d'un boîtier de dispositif (3) et d'un dispositif d'éclairage, dans lequel le dispositif d'éclairage comprend un panneau lumineux (2) et au moins une source lumineuse (7) affectée au côté étroit du panneau lumineux (2) pour coupler la lumière dans le panneau lumineux (2), et un réflecteur (5) faisant face à un côté plat (8) du panneau lumineux (2), dans lequel le côté plat (8) tourné vers le réflecteur (5) du panneau lumineux (2) et/ou du réflecteur (5) et/ou une couche intermédiaire entre le réflecteur (5) et le panneau lumineux (2) est pourvu d'une structure de surface (6), qui est une grille linéaire de lignes de grille continues et sécantes (9) ; et dans lequel
le panneau lumineux (2) est au moins partiellement encastré dans le boîtier de dispositif (3), dans lequel le boîtier de dispositif (3) recouvre au moins un côté étroit du panneau lumineux (2), par l'intermédiaire duquel la lumière provenant d'au moins une source lumineuse (7) peut être couplée dans le panneau lumineux (2), dans lequel l'au moins une source lumineuse (7) est disposée entre un côté intérieur du boîtier de dispositif (3) et ledit côté étroit du panneau et dans lequel le réflecteur (5) faisant face au côté plat (8) du panneau lumineux (2) est couvert par une paroi de boîtier (15) du boîtier de dispositif (3).

2. Portique selon la revendication précédente, dans lequel la structure de surface (6) possède une largeur de maille qui reste la même sur le côté plat (8) du panneau lumineux (2) et/ou un taux de remplissage constant.

3. Portique selon une des revendications précédentes, dans lequel la structure de surface (6) possède un taux de remplissage de 3 pour cent à 25 pour cent, de préférence 5 pour cent à 15 pour cent de la surface totale du côté plat (8) du panneau lumineux (2).

4. Portique selon une des revendications précédentes, dans lequel la structure de surface (6) possède une largeur de maille comprise entre 2 et 3 mm.

5. Portique selon une des revendications précédentes, dans lequel les lignes de grille (9) sont blanches.

6. Portique selon une quelconque des revendications précédentes, dans lequel les lignes de grille (9) s'étendent en inclinaison selon un angle aigu par rapport à au moins un côté étroit (13), via lequel la lumière provenant de la source lumineuse (7) peut être couplée dans le panneau lumineux (2).

7. Portique selon une quelconque des revendications précédentes, dans lequel un côté plat (16 ; 26) du panneau lumineux (2) qui se détourne du réflecteur (5) et/ou un panneau d'émission disposé en aval (4) du panneau lumineux (2) forme une surface d'émission et/ou de sortie de lumière.

8. Portique selon une quelconque des revendications précédentes, dans lequel un côté étroit (17, 18) du panneau lumineux (2) s'étendant transversalement par rapport au côté plat (8) et/ou du panneau d'émission disposé en aval (4) forme une surface de sortie et/ou d'émission lumineuse.

9. Portique selon une quelconque des revendications précédentes, dans lequel une émission sur des axes multiples est prévue et le dispositif d'éclairage possède plusieurs directions d'émission principales, dans lequel une première direction d'émission principale est de préférence orientée perpendiculairement au côté plat (8) du panneau lumineux (2) et une autre direction d'émission principale est orientée essentiellement parallèlement au côté plat (8) du panneau lumineux.

10. Portique selon la revendication 7, dans lequel le panneau lumineux (2) ou le panneau d'émission disposé en aval (4) possède un côté étroit du panneau, qui forme une surface de sortie et/ou d'émission de lumière et par rapport au boîtier du dispositif (3) est disposé en étant exposé de telle sorte que la lumière puisse être émise vers l'environnement du boîtier.

11. Portique selon une des revendications précédentes, dans lequel le portique (27) est arqué et s'étend sur un espace libre (28) et/ou est autoportant.

12. Portique selon la revendication précédente, dans lequel le portique (27) possède une structure modulaire et peut être assemblé à partir de plusieurs parties de portique, notamment des parties de base droites (27a, 27d) et au moins une partie de liaison courbe et/ou coudée (27b, 27c), dans lequel les parties de portique sont de préférence profilées de telle sorte que les parties de portique puissent être amenées en prise l'une avec l'autre par correspondance de forme, en particulier puissent être enfichées l'une dans l'autre.

13. Portique selon une des deux revendications précédentes, dans lequel au moins un dispositif d'affichage pour afficher des informations, notamment deux écrans (24) orientés vers des côtés opposés, est prévu sur le portique (27), de préférence au niveau d'un sommet de portique ou d'une zone de limite supérieure.
